# EUROPEAN PATENT APPLICATION

(11) **EP 1 193 110 A1**
(43) Date of publication of application: **03.04.2002**
(21) Application number: 01308215.1
(22) Date of filing: 27.09.2001
(51) Int. Cl.: B60N 2/22, B60N 2/235

(54) **Seat reclining device**

(30) Priority: 29.09.2000 JP 2000301174
(71) Applicant: Fujikiko Kabushiki Kaisha, Kosai-shi, Shizuoka-ken (JP)
(72) Inventor: Ikegaya, Isao, Kosai-shi, Shizuoka-ken (JP)
(74) Representative: Abbie, Andrew Kenneth

(57) **Abstract**

A first supporting member (10) supports a first seat member. A second supporting member (60) supports a second seat member rotatable relative to the first seat member. An angular restrictor (80, 90) is provided between the first and the second supporting members (10, 60) for restricting an angle between the first and the second supporting members (10, 60) within an angular range.

## Description

### BACKGROUND OF THE INVENTION

### 1. Field of the Invention

The present invention relates to a seat reclining device in which a seat back rotates about a seat cushion, and, more specifically, to one adapted for use in a vehicle, such as an automobile.

### 2. Description of Relevant Art

Conventionally, this kind of a seat recliner has been known with the following constitution. The seat recliner includes: a frame mounted to the frame plate of a seat cushion; and a lid mounted to an arm plate of a seat back. The frame and the lid are rotatable relative to each other. The meshing of a locking gear, mounted on the frame, with an internal gear, formed on an inner peripheral face of the lid, prevents the frame and the lid from their relative rotation. When an operational shaft through the frame and the lid rotates, the locking gear operates via a cam plate. When the locking gear and the internal gear are disengaged from each other, the arm plate as the seat back is inclined forwardly due to the biasing force of a coil spring.

### SUMMARY OF THE INVENTION

In the aforementioned seat recliner, for example, the abutting of the arm plate against a flange provided to the frame plate allows the restriction of the operational angle of the seat back. This causes the arm plate and the frame plate to provided with stoppers, thus restricting the layout. The prevention of an extraneous substance between the arm plate and the flange of the frame plate needs the providing of a cover. This causes the increase of the number of components, thus enhancing a productive cost.

It therefore is desirable to provide a seat reclining device for a vehicle in which a restrictor for the restricting of the operational angle of a seat back is housed in a locking mechanism.

An aspect of the invention provides the following seat reclining device. A first supporting member supports a first seat member. A second supporting member supports a second seat member rotatable relative to the first seat member. An angular restrictor is provided between the first and the second supporting members for restricting an angle between the first and the second supporting members within an angular range.

Preferably, the angular restrictor includes a cam mechanism.

Preferably, the cam mechanism includes: a combination of a cam and a cam follower. A cam is integral with the first supporting member. A cam follower is integral with the second supporting member.

Preferably, the cam mechanism includes a combination of cam and cam follower. A cam is integral with the second supporting member. A cam follower is integral with the first supporting member.

Preferably, the cam has an opening formed to the first supporting member. The opening has a pair of end walls defining the angular range. The cam follower has a projection from the second supporting member. The projection is received in the opening for stopping the projection against one of the end walls.

Preferably, the cam has an opening formed to the second supporting member. The opening has a pair of end walls defining the angular range. The cam follower has a projection from the first supporting member. The projection is received in the opening for stopping the projection against one of the end walls .

Preferably, the cam has an angular changer in the opening for changing the angular range.

Preferably, the angular changer has a screwed member projecting from one of the end walls.

Preferably, the seat reclining device further includes a switch for switching between locking and disengaging between the first and the second supporting members.

Preferably, the switch includes a rotatable input member; a cam member rotatable the input member; and a locking member supported by the first supporting member. The locking member is movable between the second supporting member and the cam member. The locking member is followable with the cam member for locking with and disengaging from the second supporting member.

Preferably, the first supporting member includes a pair of guides projecting therefrom. Guides have the locking member interposed therebetween to be guided between the second supporting member and the cam member.

Preferably, the cam member includes a first cam plate rotatable with the input member for guiding the locking member to be locked with the second supporting member.

Preferably, the cam member includes a second cam plate rotatable with the input member for guiding the locking member to be disengaged from the second supporting member.

Preferably, the seat reclining device further includes a biasing member supported by the first supporting member. The biasing member biases against the cam member.

According to the aspect of the invention, an arm plate and a frame plate improve in the degree of freedom of shape and layout. The omitting of a cover results in the reduction of the number of components and of a productive cost.

The changer allows the operational angle between the first and the second seat members to be changed, thus corresponding with each specification of many kinds of vehicles.

Achieved the restricting of the operational angle is the abutting of the projection against one of the end walls of the opening, thus allowing the considerably simple structure.

The change of the amount of the projecting of the screwed member from an end wall allows the operational angle to be easily changed.

### BRIEF DESCRIPTION OF THE ACCOMPANYING DRAWINGS

In order that the invention may be well understood, some embodiments thereof, which are given by way of example only, will now be described with reference to the drawings, in which:
Fig. 1A is an explanatory front view showing a partially broken locking mechanism according to the first embodiment of the invention;
Fig. 1B is a front view showing the operation of the locking mechanism of Fig. 1A;
Fig. 2 is an exploded perspective view of the locking mechanism ;
Fig. 3 is an explanatory front view of a seat recliner for a vehicle.
Fig. 4 is an explanatory view taken on line IV-IV of Fig. 3;
Fig. 5 is an explanatory view taken on line V-V of Fig. 4;
Fig. 6 is an explanatory front view of an arm plate;
Fig. 7 is an explanatory sectional view taken on line VII-VII of Fig. 6;
Fig. 8 is an explanatory front view showing the relationship between a cam and a cam follower of a locking mechanism according to the second embodiment of the invention;
Fig. 9 is an explanatory front view showing the relationship among a cam, a cam follower, and a changer for movement range of a locking mechanism according to the third embodiment of the invention; and

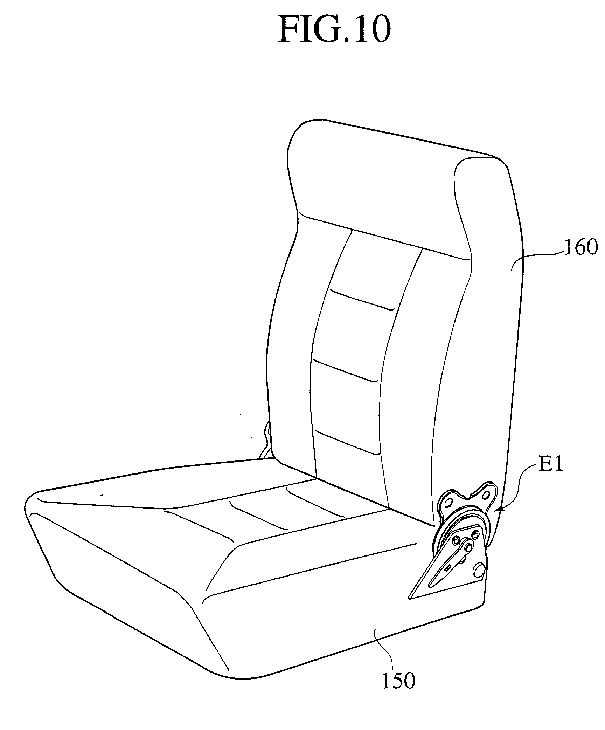

Fig. 10 is a perspective view of a seat into which the seat recliner is incorporated.

### DETAILED DESCRIPTION OF THE PREFERRED EMBODIMENTS

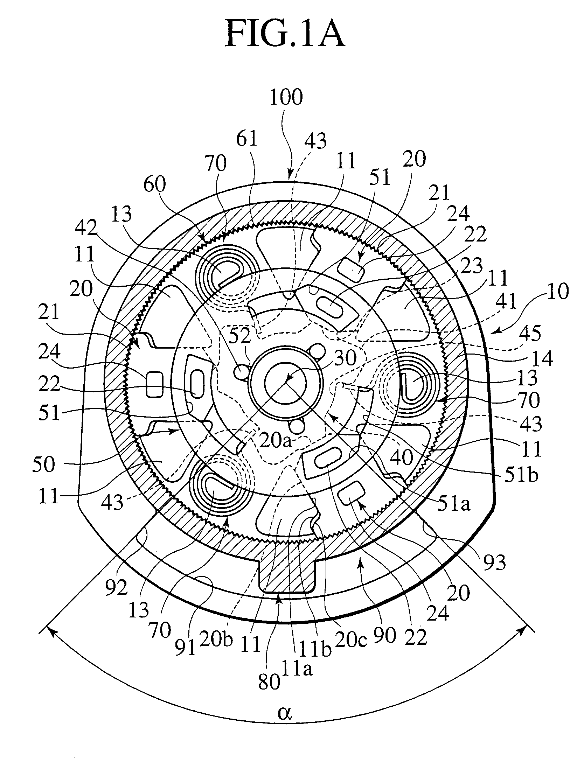

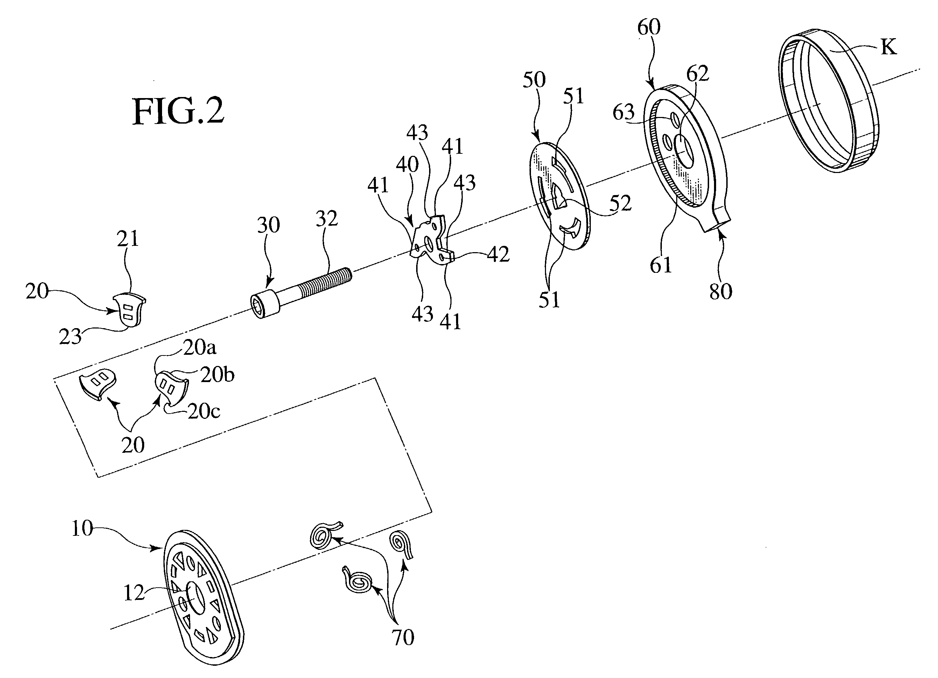

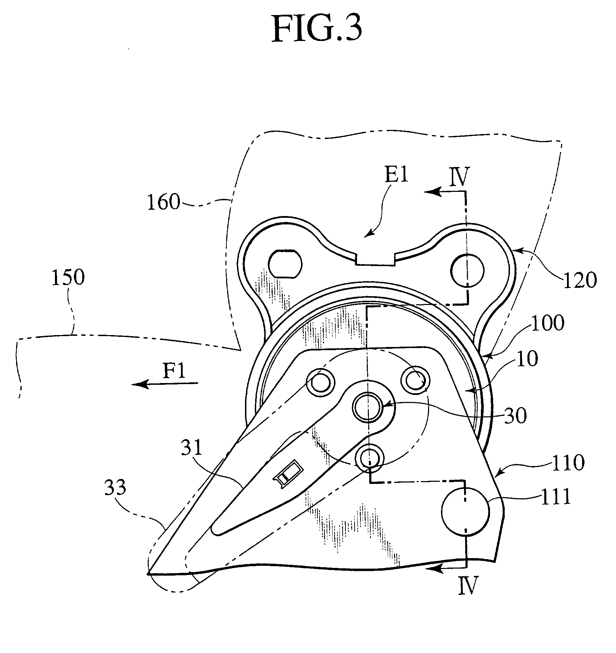

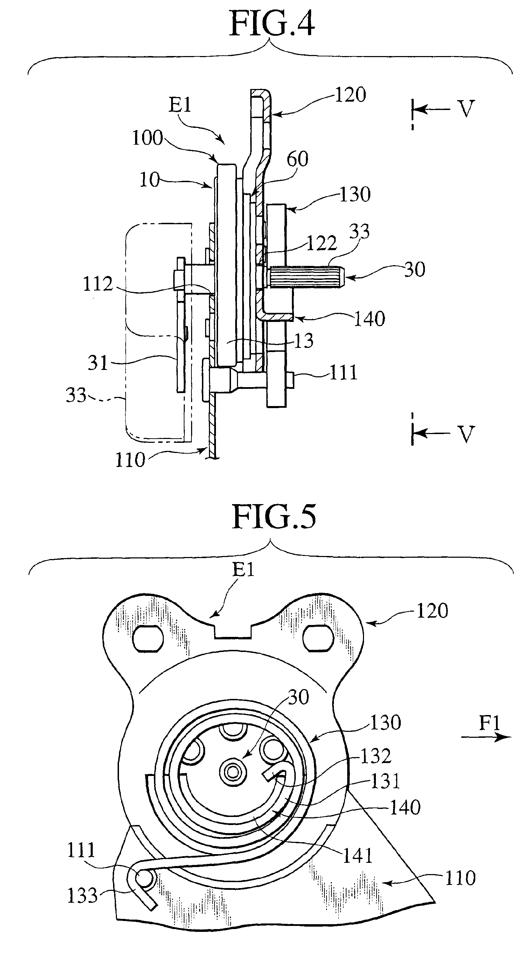

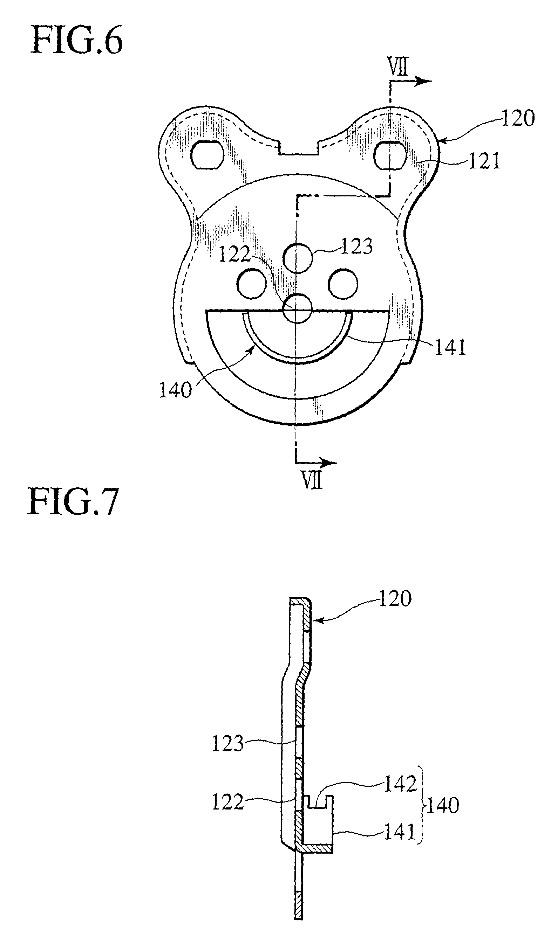

There will be detailed below the preferred embodiments of the present invention with reference to the accompanying drawings. Figs. 1A to 7, Fig. 8, and Fig. 9 show the first embodiment, the second embodiment, and the third embodiment, respectively. Like members are designated by like reference characters. The embodiments show examples of three locking gears, while two or more than three ones are preferable.

### First Embodiment

Seat recliner E1 for a vehicle, as shown by the first embodiment, has lid 60 as a second supporting member, which covers the inner face of circular opening 14 formed to frame 10 as a first supporting member in a circular plate shape, and which rotates along the inner peripheral face of frame 10. The meshing of locking gears 20 as a locking member normally located in frame 10 with internal gear 61 formed the inner peripheral face prevents frame 10 and lid 60 form relative rotation. The rotation of operation shaft 30 as a switch or an input member, passing through frame 10 and lid 60, causes locking gears 20 to be centripetally drawn for the disengagement of the lock. This allows lid 60 to be rotated relative to frame 10. These constitute locking mechanism 100.

Mounted on the outer peripheral face of frame 10 is frame plate 110 mounted to seat cushion 150. Mounted on the outer side of lid 60 is arm plate 120 to seat back 160.

The outer peripheral face of lid 60 has a cam follower 80 located thereon. Cam follower 80 is movably mated with cam 90 as a cam located on the inner peripheral face of frame 10. By the appropriate establishment of the angular range a of loose fitting means 90 for the rotation of the lid, the operational angle of lid 60 is restricted.

The constitution of the above first embodiment is explained in detail.

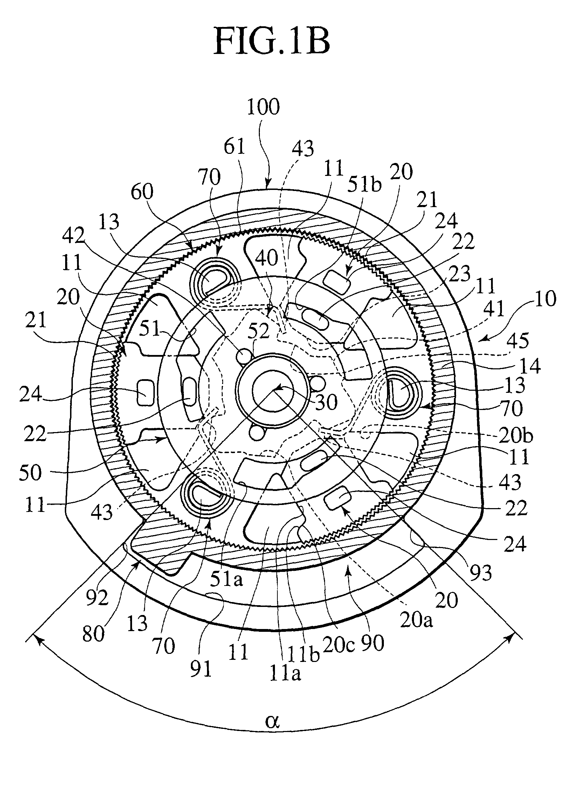

The locking mechanism 100 is constituted with circular plate shaped frame 10. The mechanism has lid 60 with internal gear 61 on the inner peripheral face thereof, which covers the inner face of circular opening 14 formed to frame 10 and which is mounted frame 10 to rotate on its outer peripheral face along the inner peripheral face of frame 10. The mechanism has locking gears 20 meshed with internal gear 61 of lid 60 radially slidably located on the inner face of frame 10. The mechanism has rotatable operation shaft 30 passing through holes 12, 62 formed to the central portions of frame 10 and lid 60, respectively. The mechanism has cam plate 40 as a first cam integral with operation shaft 30 to move locking gears 20 radially outward by the rotation of the operation shaft 30. The mechanism has cam plate 50 as a second cam plate which is located on the inner face of cam plate 40 and which, due to the rotation of operation shaft 30, rotates synchronously with cam plate 40 thus to move locking gears 20 radially inward. The mechanism has locking springs 70 biasing against cam plate 40 to normally press lock gears 20 radially outward. The biasing force of locking springs 70 causes locking gears 20 and internal gear 61 to be meshed with each other, thus preventing the rotation of lid 60 relative to frame 10. The rotation of operation shaft 30 (as shown by the clockwise direction in Fig. 1) causes locking gears 20 to be centripetally drawn by cam plate 50 for the disengagement of the lock. This allows the rotation of lid 60 relative to frame 10.

In addition, as explaining locking mechanism 100 in detail, a plurality of locking gears 20 as three ones in the embodiment, are arranged on the inner face of frame 10 at an equal interval. The locking gears are radially slidably inserted between a pair of the parallel guide faces 11b of guides 11, formed radially on the inner face of frame 10.

Locking gears 20 each have arced external locking gear 21 formed on the outer peripheral face thereof, with its radius identical to one of internal gear 61 of lid 60. The inner peripheral faces 20a thereof each are in contact with the first cam face 41a of cam plate 40 to constitute engagement part 23. The locking gears each have projection 22 provided on a side thereof and radially close to the inner periphery thereof, which engages with cam groove 51 of plate 50. The locking gears each have projection 24 radially close to the outer periphery thereof. The locking gears each have opposite inner side faces 20b to slide on guide faces 11b of guides 11. The locking gears each have outer side faces 20c which project from side faces 20b and which abut against stopper faces 11c.

Operation shaft 30 is loosely fitted in through-holes 12, 62, formed at the central portions of frame 10 and lid 60, respectively. The shaft is loosely fitted and inserted in supporting holes 112, 122, formed to frame plate 110 and arm plate, respectively. The portion of operation shaft 30, projecting outwardly from frame plate 110 of operation shaft 30, has operation lever 31 mounted thereto. The portion, projecting outwardly from arm plate 120, has spline 32 for the connection of both locks, formed thereon. Operation lever 31 has operation knob 33 mounted thereto.

Cam plate 40 is pressed in the intermediate portion of operation shaft 30 to be fixed thereto. The outer periphery thereof has cam face 41 formed thereon, which is engaged with engagement parts 23 each formed on the side of locking gear 20 in opposition to the external gear 21 for the outward pressing of locking gear 20. Cam plate 40 has locking portions 43 locked with the outer ends of three locking springs 70 which have bases mounted to three projections 13 formed on the inner face of frame 10, respectively. The locking portions are biased to normally press lock gears 20 outwardly.

The cam plate 50 has mounting holes 52 for the fitting of mounting projections 42 therein which are provided on the side of cam plate 40 at the interval of 120 degree on the circumference of a circle about the axis of operation shaft 30, thus being rotatable integrally with operation shaft 30. The plate 50 defines cam grooves 51a loosely engaged with projections 22 in the locking of locking gears 20. The plate defines cam grooves 51b radially inside of cam grooves 51a. The cam grooves 51b each guide the projection 22 to disengage locking gear 20 from internal gear 21.

Lid 60 is fitted in circular opening 14 formed on the inner face of frame 10. Between the inner peripheral face of circular opening 14 and the outer peripheral face of lid 60, the lid is rotatable relative to frame 10. The inner peripheral face of a circular opening formed in lid 60 has annular internal gear 61 formed thereon, which is meshable with external gears 21 of locking gears 20. Locking gears 20 each have projection 24, formed close to and radially outside of projection 22. The abutting of projection 24 against the inner face of lid 60 causes locking gears 20 to be restrained not to move between lid 60 and frame 10. Frame 10 and cover 60 are covered with ring-shaped cover K to hold their outer peripheries thereof, thus being rotatably supported relative to each other.

Projection 80, as stopper or a cam follower, projects from the outer periphery of lid 60. Opening 90, as a stopper loose fitting means or a cam, is formed in a fan shape for the loose fitting of projection 80 with the inner peripheral face of circular opening 14 of frame 10. The opening is constituted with arced wall 91 about the axis of operation shaft 30; end walls 92, 93 connecting the both ends of arced wall 91 with the axis of operation shaft 30.

According to locking mechanism 100 with the aforementioned constitution, locking gears 20 are pressed outwardly by the cooperative function of locking springs 70 with cam plate 40. External gears 21 are meshed with internal gear 61 of lid 60, thus resulting in the lock of the rotation of lid 60, as shown in Fig. 1A.

In this lock state, when operation shaft 30 is rotated in the clockwise direction of Fig. 1, cam face 41 of cam plate 40 disengages from engagement portion 23 of locking gears 20. The cooperation of cam grooves 51b with projections 22 of locking gears 20 causes the centripetal movement of locking gear 20. The disengagement of external gears 21 of locking gears 20 from internal gear 61 of lid 60 causes the lid 60 to be disengaged, as shown in Fig. 1B. Thus, arm plate 120 rotates in a front direction (F1) due to the biasing force of coil spring 130.

When projection 80 provided to lid 60 abuts against end wall 92 of opening 90 of frame 10, the rotation of arm plate 120 as back seat 160 in a front direction (F1) is restricted. By the appropriate establishment of the angular range a of opening 90 for the rotation of the lid, the operational angle of seat back 160 is appropriately set.

Lid 60 and arm plate 120 are fixed, with a plurality of or three projections 63 in the embodiment formed on the outer face of lid 60 and mounting holes 123 formed to arm plate 120 to engage with projections 63, being welded each other. Frame 10 and frame plate 110 are fixed, using the similar manner.

Arm plate 120 has mounting portion 121 to the seat back; and holder 140 for holding inner portion 131 of coil spring 130.

Holder 140 is provided under through-hole 122 of arm plate 120. Along the locus of the radius of a predetermined curvature about hole 122, arm plate 120 is cut and raised in a semicircle shape. Opening 142 formed to the end of cut and raised part 141 has inner end 132 of coil spring 130 latched thereon. Outer end 133 of coil spring 130 is latched on locking pin 111 fixed to frame plate 110.

According to the aforementioned seat recliner for a vehicle, the restriction of the operational angular range of arm plate 120 as seat back 160 is performed by the cooperative function of projection 80 as a cam follower, formed to lid 60 housed in locking mechanism 100, with opening 90 as a cam provided to frame 10.

The means for the restriction of the operational angular range of seat back 160 is included in locking mechanism 100, and the shapes and layout of arm plate 120 and frame plate 110 improve in the degree of freedom. When seat back 160 is adjusted at an operational angle, the situation that an extraneous substance is interposed between arm plate 120 and frame plate 110 is perfectly removed, thus allowing a cover to be omitted. This causes the reduction of the number of components, thus reducing the productive cost.

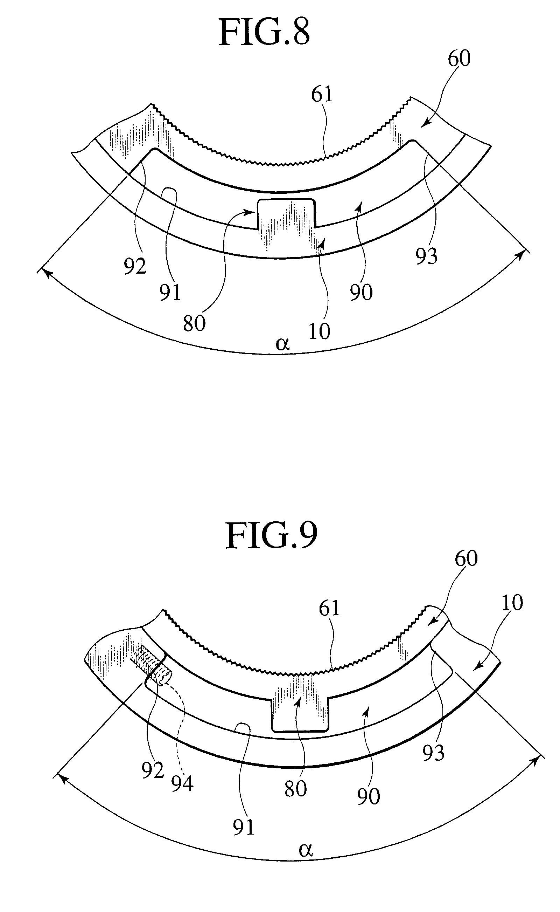

Next, the second embodiment of the invention is explained, referring to Fig. 8. Attached to the elements in common with the elements of the first embodiment are the same characters, to omit their explanations.

In the second embodiment, projection 80 as a cam follower formed on the inner peripheral face of circular opening 14 of frame 10. Opening 90 as a cam is formed on the outer peripheral face of lid 60.

Another constitution is similar to one of the first embodiment. The second embodiment has the similar function and benefit to the first embodiment.

Next, the third embodiment of the invention is explained, referring to Fig. 9. Attached to the elements in common with the elements of the first and second embodiments are the same characters, to omit their explanations.

In the third embodiment, located in opening 90 as a cam is screw 94 as a changer for angular range, which allows the range of the movement of projection 80 as a cam to be changed.

This screw 94, in the embodiment, is screwed into end wall 92 of opening 90 for the axial movement. The change of the amount of the projecting screw 94 allows the operation angular range of seat back 160 to be changed.

The entire contents of Japanese Patent Applications P2000 -301174 (all filed September 29, 2000) are incorporated herein by reference.

While preferred embodiments of the present invention have been described using specific terms, such description is for illustrative purposes, and it is to be understood that changes and variations may be made without departing from the scope of the following claims.

## Claims

1. A seat reclining device comprising: a first supporting member for supporting a first seat member; a second supporting member for supporting a second seat member and rotatable relative to the first seat member; and an angular restrictor provided between the first and the second supporting members for restricting angular rotation between the first and the second supporting members within an angular range.

2. A seat reclining device according to claim 1, wherein the angular restrictor comprises a cam mechanism.

3. A seat reclining device according to claim 2, wherein the cam mechanism comprises a combination of a cam and a cam follower, the cam being integral with one of the supporting members and the cam follower being integral with the other supporting member.

4. A seat reclining device according to claim 3, wherein the cam comprises an opening provided in the respective supporting member, the opening having a pair of end walls defining the angular range, and the cam follower is a projection projecting from the respective supporting member, the projection being received in the opening for stopping the projection against one of the end walls.

5. A seat reclining device according to claim 4, wherein the cam has an angular changer in the opening for changing the angular range.

6. A seat reclining device according to claim 5, wherein the angular changer comprises a screwed member projecting from one of the end walls.

7. A seat reclining device according to any one of the preceding claims, further comprising a switch for switching between locking and disengaging between the first and the second supporting members.

8. A seat reclining device according to claim 7, wherein the switch comprises: a rotatable input member; a cam device rotatable with the input member; and a locking member supported by the first supporting member, the locking member being movable between the second supporting member and the cam device, the locking member being followable with the cam device for locking with and disengaging from the second supporting member.

9. A seat reclining device according to claim 8, wherein the first supporting member comprises a pair of guides projecting therefrom, guides having the locking member interposed therebetween to be guided between the second supporting member and the cam device.

10. A seat reclining device according to claim 8 or 9, wherein the cam device comprises a cam plate rotatable with the input member for guiding the locking member to be locked with the second supporting member.

11. A seat reclining device according to claim 8, 9 or 10, wherein the cam devicec comprises a cam plate rotatable with the input member for guiding the locking member to be disengaged from the second supporting member.

12. A seat reclining device according to any one of claims 8 to 11, further comprising a biasing member supported by the first supporting member, the biasing member biasing against the cam device.

13. A device for controlling relative movement between two seat members, said device comprising a first portion fittable to one said seat member, a second portion fittable to the other seat member, locking means releasable to permit relative movement between said first portion and said second portion and limiting means for limiting the extent of said relative movement, said limiting means being provided in said locking means.
